# EUROPÄISCHE PATENTSCHRIFT

(11) **EP 3 385 584 B1**
(45) Veröffentlichungstag und Bekanntmachung des Hinweises auf die Patenterteilung: **25.09.2019**
(21) Anmeldenummer: 18165665.3
(22) Anmeldetag: 04.04.2018
(51) Int. Cl.: F16K 15/14, F16K 17/02, H01M 2/12, F16K 24/00

(54) **DRUCKAUSGLEICHSVORRICHTUNG FÜR EIN GEHÄUSE**
PRESSURE COMPENSATION DEVICE FOR A HOUSING
DISPOSITIF DE RÉPARTITION DE PRESSION POUR UN BOÎTIER

(30) Priorität: 06.04.2017 DE 102017003360
(43) Veröffentlichungstag der Anmeldung: 10.10.2018
(73) Patentinhaber: Carl Freudenberg KG, 69469 Weinheim (DE)
(72) Erfinder: Kleinke, Christian, 64297 Darmstadt (DE); Schäfer, Christopher, 64287 Darmstadt (DE); Kritzer, Peter, Dr., 67147 Forst (DE)

(56) Entgegenhaltungen:
- EP-A1- 1 892 029
- EP-A1- 2 503 199
- EP-A1- 2 533 346
- DE-A1-102009 050 878
- DE-A1-102011 015 925
- DE-B3-102010 044 333

## Beschreibung

### Technisches Gebiet

Die Erfindung betrifft eine Druckausgleichsvorrichtung für ein Gehäuse, wobei die Druckausgleichsvorrichtung eine Innenseite, eine Außenseite und einen gitterförmigen Käfig mit einer Gasdurchtrittsöffnung umfasst, wobei die Gasdurchtrittsöffnung die Innenseite und die Außenseite bedarfsweise strömungsleitend verbindet und in Richtung ihrer Durchströmbarkeit von einem Innen- und einem Außenrand begrenzt ist , wobei die Gasdurchtrittsöffnung von einer gaspermeablen Membran überdeckt ist und wobei die Membran (8) als Vliesstoff-Verbundteil (10) ausgebildet ist und zumindest eine Vliesstofflage (11) umfasst.

### Stand der Technik

Eine solche Druckausgleichsvorrichtung für ein Gehäuse ist aus der EP 1 892 029 A1 bekannt.

Die vorbekannte Druckausgleichsvorrichtung umfasst eine erste und eine zweite gasdurchlässige Membran, die jeweils separat erzeugt und in der Druckausgleichsvorrichtung räumlich getrennt voneinander angeordnet sind.

Mit der zweiten gasdurchlässigen Membran bildet eine Absorbtionsschicht eine Einheit.

Außerdem umfasst die Druckausgleichsvorrichtung ein erstes Einwegventil, das auf der der Innenseite des Gehäuses abgewandten Umgebungsseite der ersten gasdurchlässigen Membran angeordnet ist.

Die beiden gasdurchlässigen Membranen sind unabhängig voneinander durchströmbar, wobei beide Membranen mit dem Innendruck aus dem Gehäuse unmittelbar beaufschlagt sind.

Die Absorbtionsschicht enthält ein Wasserabsorbtionsmittel, um Feuchtigkeit aus dem durchströmenden Gas zu absorbieren.

Das erste Einwegventil, das die erste gasdurchlässige Membran umgebungsseitig überdeck, ist derart ausgebildet, dass die Gasflussrichtung eine Richtung ist, in der das Gas von der Innenseite des Gehäuses zur Außenseite des Gehäuses, also zur Umgebung, fließt. Diese Gasflussrichtung ist gegeben, wenn im Inneren des Gehäuses, bezogen auf die Umgebung, ein relativer Überdruck herrscht.

Dann fließt das Gas von der Innenseite des Gehäuses, ohne die Absorbtionsschicht, die mit der zweiten gasdurchlässigen Membran zusammenwirkt, zu durchdringen.

Herrscht demgegenüber im Inneren des Gehäuses ein relativer Unterdruck, bezogen auf den Druck in der Umgebung, ist das erste Einwegventil gesperrt. In einem solchen Fall strömt Gas aus der Umgebung durch die zweite gasdurchlässige Membran ins Innere des Gehäuses.

Die erste und die zweite gasdurchlässige Membran enthalten jeweils ein poröses Fluorharz-Material.

Das erste Einwegventil besteht aus einem elastischen Material, beispielsweise aus einem elastomeren Werkstoff.

Würde im Inneren des Gehäuses ein für die Membranen als kritisch erachteter Überdruck, bezogen auf die Umgebung, überschritten, würde ein Druckausgleich durch eine Notentgasung aus dem Inneren des Gehäuses in die Umgebung derart erfolgen, dass zunächst beide gasdurchlässigen Membranen zerstört würden, dass der als kritisch erachtete Überdruck danach auch durch das erste Einwegventil entweichen würde und dass beide zerstörten Membranen anschließend, um die Druckausgleichsvorrichtung weiter benutzen zu können, ausgetauscht werden müssten.

Das erste Einwegventil ist bei einem Druckausgleich vom Inneren der Druckausgleichsvorrichtung in die Umgebung jeder der beiden gasdurchlässigen Membranen in einer funktionstechnischen Reihenschaltung nachgeordnet. Zunächst liegt der Innendruck aus dem Gehäuse an den Membranen und nicht am ersten Einwegventil an.

Ein als kritisch für die Membranen erachteter Überdruck im Inneren des Gehäuses kann durch eine Notentgasung in die Umgebung ausreichend rasch nur dann abgebaut werden, wenn die beiden Membranen zerstört sind.

Eine weitere Druckausgleichsvorrichtung ist aus der DE 10 2011 015 925 A1 bekannt. Ein Berstschutz durch eine Notentgasung aus dem Inneren des Gehäuses in die Umgebung ist expressis verbis nicht erwähnt.

Die Druckausgleichsvorrichtung ist ein Bestandteil eines Batteriegehäuses eines Batteriesystems und soll einen Luftaustausch zwischen dem Inneren des Batteriegehäuses und der Umgebung ermöglichen, ohne dass flüssiges Wasser aus der Umgebung ins Innere des Batteriegehäuses eindringt. Dazu sind zwei Fluiddurchgänge vorgesehen und eine Membran, die luftdurchlässig aber undurchlässig für flüssiges Wasser ist. Der erste Fluiddurchgang weist ein erstes Ventil auf, das von der Umgebung in Richtung der Membran betrachtet hinter der Membran angeordnet ist. Bei einem die Membran durchdringenden, in das Batteriegehäuse gerichteten Fluidstrom öffnet dieses erste Ventil.

In umgekehrter Strömungsrichtung, also aus dem Inneren in Richtung Umgebung, sperrt das erste Ventil fluiddicht ab.

Im zweiten Fluiddurchgang ist ein zweites Ventil vorgesehen, das bei einem aus dem Batteriegehäuse heraus gerichteten Fluidstrom öffnet und in umgekehrter Strömungsrichtung fluiddicht absperrt.

Wie bei der eingangs beschriebenen Druckausgleichsvorrichtung, sind die beiden Fluiddurchgänge relativ versetzt zueinander angeordnet, so dass beide Druckausgleichsvorrichtungen jeweils große Abmessungen aufweisen.

Außerdem umfasst die Druckausgleichsvorrichtung einen Wasserabsorber, der, von der Membran aus betrachtet, im Inneren des Gehäuses angeordnet ist. Wasserdampf, der in einem durch den ersten Fluiddurchgang in das Gehäuse strömenden Luftstrom enthalten ist, wird durch den Wasserabsorber absorbiert. Der Wasserabsorber kann so angeordnet und dimensioniert sein, dass ein Luftaustausch zwischen der Umgebung und dem Inneren des Gehäuses - und umgekehrt - sowohl durch den ersten als auch durch den zweiten Fluiddurchgang nur durch den Wasserabsorber hindurch möglich ist. Während einer Notentgasung des Gehäuses, wenn im Inneren, bezogen auf die Umgebung, ein unerwünscht hoher Überdruck besteht, würde der Wasserabsorber mit diesem unerwünscht hohen Überdruck direkt beaufschlagt und dabei möglicherweise zerstört, bevor der Überdruck durch den zweiten Fluiddurchgang in die Umgebung entweichen kann.

Der Wasserabsorber und das zweite Ventil sind in einer funktionstechnischen Reihenschaltung angeordnet, ebenso wie die Membran und das erste Ventil, das auf der dem Inneren des Gehäuses zugewandten Seite der Membran angeordnet ist.

Die Membran und der Wasserabsorber sind zwei voneinander getrennt hergestellte und unabhängig voneinander in der Druckausgleichsvorrichtung verbaute Teile.

Eine weitere Druckausgleichsvorrichtung ist aus der EP 2 554 882 A1 bekannt. Die vorbekannte Druckausgleichsvorrichtung ist zum Ausgleichen eines Innendrucks in einem Gehäuse vorgesehen, wobei innerhalb des Gehäuses eine elektrochemische Vorrichtung angeordnet ist. Die gaspermeable Membran ist in Abhängigkeit von Änderungen des Innendrucks verformbar und besteht bevorzugt aus einem PTFE-Werkstoff. Die Membran ermöglicht im Normalfall einen Druckausgleich zwischen der Innenseite und der Außenseite. Im Fall eines unerwünscht überhöhten Innendrucks im Gehäuse wird die Membran durch einen als Notentgasungselement ausgebildeten Dorn zerstört. Die zerstörte Membran gibt die Gasdurchtrittsöffnung für eine Notentgasung des Gehäuses frei. Dadurch ist ein Berstschutz für das Gehäuse gegeben.

Als wesentlich ist herausgestellt, dass der vorbekannten Druckausgleichsvorrichtung das Konzept zu Grunde liegt, wonach die Funktionen von Druckausgleich und Notentgasung bei gleichzeitig hoher Beständigkeit gegenüber einem Wasserdruck von der Außenseite in nur einem einzigen Bauteil, nämlich der bedarfsweise zerstörbaren PTFE-Membran, kombiniert sind.

Zwei verschiedene Bauteile, nämlich ein erstes für den Druckausgleich bei Druckschwankungen im Normalbetrieb und ein zweites für die bedarfsweise Notentgasung, werden ausdrücklich als nachteilig erachtet.

### Darstellung der Erfindung

Der Erfindung liegt die Aufgabe zu Grunde, eine Druckausgleichsvorrichtung der eingangs genannten Art derart weiterzuentwickeln, dass die Permeabilität der Membran erhöht ist, so dass die Membran auch eine Notentgasung der Innenseite unbeschädigt übersteht und dass die Membran in der Druckausgleichsvorrichtung und die Druckausgleichsvorrichtung selbst anschließend unverändert weiterbenutzt werden können.

Diese Aufgabe wird erfindungsgemäß durch eine Druckausgleichsvorrichtung mit den Merkmalen von Anspruch 1 gelöst.

Auf vorteilhafte Ausgestaltungen nehmen die Unteransprüche Bezug.

Zur Lösung der Aufgabe ist eine Druckausgleichsvorrichtung für ein Gehäuse vorgesehen, wobei die Druckausgleichsvorrichtung eine Innenseite, eine Außenseite und einen gitterförmigen Käfig mit einer Gasdurchtrittsöffnung umfasst, wobei die Gasdurchtrittsöffnung die Innenseite und die Außenseite bedarfsweise strömungsleitend verbindet und in Richtung ihrer Durchströmbarkeit von einem Innen- und einem Außenrand begrenzt ist, wobei die Gasdurchtrittsöffnung von einer gaspermeablen Membran überdeckt ist und wobei die Membran als Vliesstoff-Verbundteil ausgebildet ist und zumindest eine Vliesstofflage umfasst und wobei der Membran ein als Berstschutz ausgebildetes Überdruckventil in einer funktionstechnischen Parallelschaltung zugeordnet ist.

Erfindungswesentlich ist, dass die Membran als Vliesstoff-Verbundteil ausgebildet ist und zumindest eine Vliesstofflage umfasst. Das Verbundteil ist zumindest zweiteilig ausgebildet.

Ein Vliesstoff-Verbundteil weist eine deutlich größere Permeabilität auf, als eine wasserdichte Membran, die als PTFE-Membran ausgebildet ist.

Die erfindungsgemäße Druckausgleichsvorrichtung ist grundsätzlich für alle Bauteile mit geschlossenen Gehäusen geeignet, bei denen Differenzdrücke zwischen der Innenseite und der Außenseite zu einer Beschädigung oder zu einem Ausfall führen können. Gleichzeitig soll durch die Membran sichergestellt sein, dass kein Wasser von der Außenseite durch die Membran hindurch zur Innenseite gelangt.

Gehäuse, insbesondere für elektronische Geräte, wie zum Beispiel Batterien, Inverter, E-Motoren oder Automobil-Scheinwerfer, weisen in der Regel ein im Gehäuse eingeschlossenes Totvolumen auf.

Für Batterien in Elektrofahrzeugen beträgt dieses Totvolumen typischerweise mehr als 20 Liter, was etwa 5 % bis 20 % des gesamten Batterievolumens ausmachen kann. Je nach Ausführung der Batteriezellen im Batteriegehäuse kann dieses Totvolumen noch wesentlich höher sein.

Ähnliche Situationen ergeben sich bei E-Motoren. Hier sind technisch bedingte Totvolumina vorhanden, zum Beispiel im Bereich der Wicklung des Motors oder durch den Spalt zwischen Rotor und Stator. Auch vorgesehene Lager erhöhen das Totvolumen.

Gehäuse von elektrischen Steuergeräten sowie Sensorgehäuse schließen ebenfalls ein nicht vermeidbares Totvolumen ein.

Eine analoge Situation ist in Automobil-Scheinwerfern gegeben.

In einem hermetisch abgeschlossenen Gehäuse können aufgrund von Erwärmung/ Abkühlung während des Betriebs, äußeren, zum Beispiel klimatisch bedingten Temperaturschwankungen, Berg- und Talfahrten, atmosphärischen Luftdruckschwankungen, Transportvorgängen, insbesondere beim Transport in Flugzeugen, oder Ein- oder Ausfahren in oder aus Tunnels sowohl Über- als auch Unterdrücke im Inneren eines Gehäuses auftreten.

In letzter Zeit werden Gehäuse zunehmend dünnwandiger und dadurch leichter konstruiert, so dass die Gehäuse aufgrund ihrer Dünnwandigkeit vor unerwünscht hohen Differenzdrücken geschützt werden müssen. Dafür ist die Druckausgleichsvorrichtung vorgesehen. Durch das Druckausgleichselement können Druckspitzen abgebaut werden, und die möglichen Druckbelastungen auf das Gehäuse werden dadurch definiert reduziert.

Wesentliche Anforderungen für eine gut funktionierende Druckausgleichsvorrichtung sind eine gute Gasdurchlässigkeit während des Normalbetriebs, eine hohe Gasdurchlässigkeit von innen nach außen während einer Notentgasung, eine hohe Wasserdichtigkeit, eine gute Schmutzbeständigkeit gegenüber Ölen und Staub und eine gute mechanische Robustheit.

Insbesondere die hohe Gasdurchlässigkeit im Normalbetrieb und die hohe Wasserdichtigkeit sind üblicherweise nur schwer miteinander vereinbar.

Wie zuvor bereits ausgeführt, ist eine PTFE-Membran zwar wasserdicht. Sie ist jedoch im Normalbetrieb der Druckausgleichsvorrichtung häufig nicht gasdurchlässig genug, so dass solche Druckausgleichselemente für eine gute Funktion einen großen Querschnitt aufweisen oder mehrere Druckausgleichselemente parallel geschaltet werden müssten.

Besteht die Membran demgegenüber ausschließlich aus nur einer Vliesstofflage, kann diese zwar eine hohe spezifische Luftdurchlässigkeit aufweisen. Aufgrund der vergleichsweise großen Poren ist eine solche Membran dann jedoch nicht ausreichend wasserdicht, so dass Flüssigkeit unerwünscht von der Außenseite durch die Membran hindurch zur Innenseite vordringen kann.

Gelangt als Membran eine mikroporöse PTFE-Folie zur Anwendung, weist diese bei guter Wasserdichtigkeit nur einen vergleichsweise geringen Luftdurchsatz auf. Dies führt insbesondere bei einer Notentgasung, wo schnell große Mengen an Gas abgeführt werden müssen, zu unüberbrückbaren Problemen. Dadurch sind solche Membrane, wie eingangs beschrieben, derart ausgelegt, dass sie bei Überschreitung eines kritischen Drucks zerstört werden und nur dadurch ein rascher Druckausgleich ermöglicht wird. Dies führt jedoch dazu, dass die Membran anschließend zerstört ist und ausgetauscht werden muss. Die Druckausgleichsvorrichtung ist nach Zerstörung der Membran zunächst nicht mehr gebrauchsfähig.

Das Vliesstoff-Verbundteil weist eine ausreichend hohe Gasdurchlässigkeit für eine gute Funktion der Druckausgleichsvorrichtung auf.

In Abhängigkeit von den jeweiligen Gegebenheiten des Anwendungsfalles, wenn die Druckausgleichsvorrichtung nicht nur eine gute Gaspermeabilität aufweisen muss, sondern auch einen Berstschutz, kann als Berstschutz ein Überdruckventil zur Anwendung gelangen, durch das bei einer Überschreitung eines als kritisch erachteten Überdrucks auf der Innenseite eine Notentgasung erfolgt, bevor die Membran beschädigt oder zerstört wird. Auch nach einer Notentgasung der Innenseite steht die Druckausgleichsvorrichtung deshalb wieder uneingeschränkt zur Verfügung; eines Austauschs der Membran bedarf es nicht.

Die Innenseite der Druckausgleichsvorrichtung und damit das Innere eines Gehäuses, das eine solche Druckausgleichsvorrichtung umfasst, sind dadurch vor unerwünschten Umwelteinflüssen weiterhin geschützt. Während der gesamten Gebrauchsdauer der Druckausgleichsvorrichtung ist die Gasdurchtrittsöffnung von der Membran stets bedeckt. Die Membran trägt zum Berstschutz für das Gehäuse nicht bei. Die Membran und das Überdruckventil sind in einer funktionstechnischen Parallelschaltung derart angeordnet, dass die Druckdifferenz zwischen Innenseite und Außenseite sowohl auf die Membran als auch auf das Überdruckventil wirkt.

Das Überdruckventil kann einen kreisringförmig ausgebildeten und in Richtung der Außenseite konvex vorgewölbten Schirm aus einem elastomeren Werkstoff umfassen, dessen Innenumfang dem Außenrand im Wesentlichen entspricht, wobei der Innenumfang den Außenrand dichtend berührt. Der elastomere Werkstoff, aus dem der Schirm besteht, ist gas- und flüssigkeitsundurchlässig. Der Innenumfang stützt sich dicht auf dem Außenumfang der Membran ab, um einen Strömungskurzschluss während der bestimmungsgemäßen Verwendung der Druckausgleichsvorrichtung in dem Kontaktbereich zu verhindern.

Der Schirm weist einen als Dichtlippe ausgebildeten Außenumfang auf, wobei die Dichtlippe eine Dichtfläche des Käfigs unter elastischer Vorspannung dichtend berührt, wobei die Membran und der Schirm die Innen- und die Außenseite gemeinsam räumlich voneinander trennen und wobei die Dichtlippe für eine Notentgasung der Innenseite und zur Bereitstellung einer strömungsleitenden Verbindung zwischen Innen- und Außenseite von der Dichtfläche abhebbar und in Offenstellung bringbar ist.

Der gitterförmige Käfig kann zumindest zweiteilig ausgebildet sein, eine äußere Hälfte und eine innere Hälfte umfassen, wobei zwischen der äußeren und der inneren Hälfte die Membran und der Schirm angeordnet sind. Die der Innenseite zugewandte Unterseite des Schirms ist mit dem Druck von der Innenseite, die der Außenseite zugewandte Oberseite des Schirms mit dem Druck von der Außenseite, also dem Umgebungsdruck, beaufschlagt. Der gitterförmige Käfig weist gitterförmige Durchbrechungen auf, um die Membran und den Schirm mit dem Innendruck und dem Außendruck beaufschlagen zu können.

Überschreitet der Druck auf der Innenseite der Druckausgleichsvorrichtung einem vorherbestimmten Schwellwert, der unterhalb des Berstdrucks des Gehäuses liegt, hebt die Dichtlippe des Schirms von der Dichtfläche des Käfigs für eine Notentgasung so lange ab, bis der kritische Schwellwert wieder unterschritten ist. Anschließend legt sich die Dichtlippe selbsttätig wieder dichtend auf der Dichtfläche an. Die Funktion der Druckausgleichsvorrichtung erfolgt zerstörungsfrei. Im Anschluss an die Notentgasung kann die Druckausgleichsvorrichtung, wie vor der Notentgasung, ohne jede Einschränkung weiter benutzt werden.

Gemäß einer vorteilhaften Ausgestaltung kann es vorgesehen sein, dass zumindest eine Vliesstofflage als Mikrofaser-Vliesstofflage ausgebildet ist. Hierbei ist von Vorteil, dass eine Mikrofaser-Vliesstofflage vorteilhafter Weise wasserabweisend ausgestaltet ist und dass dadurch trotz der hohen Luftdurchlässigkeit ein Eindringen von Flüssigkeit von der Außenseite zur Innenseite unter normalen Betriebsbedingungen gut verhindert wird. Diese Ausgestaltung kann zum Beispiel durch eine Beschichtung oder eine Imprägnierung oder chemische Pfropfen mit Fluorcarbonen oder Polyurethan erfolgen. Zudem schützt eine so ausgerüstete Mikrofaser-Vliesstofflage auch vordem Eindringen von Öl und sonstigem von außen anstehenden Schmutz. Darüber hinaus schützt sie die zumindest eine darunter angeordnete Lage der Membran vor Beschädigung/Zerstörung.

Außerdem kann es vorgesehen sein, dass zumindest eine Vliesstofflage als Superabsorber-Vliesstofflage ausgebildet ist. Eine solche Superabsorber-Vliesstofflage fungiert als Sperr-Lage und verhindert in jedem Fall, dass Flüssigkeit von der Außenseite durch die Membran hindurch zur Innenseite vordringt. Die in einer solchen Vliesstofflage enthaltenen Superabsorber-Partikel nehmen Flüssigkeit von der Außenseite auf und halten sie in sich. Die Superabsorber quellen bei Wasserkontakt auf, so dass von außen anstehendes Wasser die nunmehr geschlossene Fläche nicht mehr durchdringen kann. Superabsorber sind in der Lage, ein Vielfaches ihres Eigengewichts an Flüssigkeiten aufzunehmen und zu speichern.

Die Superabsorber-Vliesstofflage kann in Richtung der Durchströmbarkeit auf der der Innenseite zugewandten Seite der Membran angeordnet sein und auf ihrer der Außenseite zugewandten Seite von der zuvor beschriebenen Mikrofaser-Vliesstofflage überdeckt sein. Dadurch entsteht das Vliesstoff-Verbundteil.

Üblicherweise ist die Superabsorber-Vliesstofflage trotz ihrer Wasserdichtigkeit allein nicht ausreichend formstabil und benötigt deshalb mindestens eine Stützlage, die durch die genannte Mikrofaser-Vliesstofflage oder ein anderes poröses Material/ eine andere poröse Struktur gebildet sein kann.

Zudem schützt die nach außen angebrachte Mikrofaser-Vliesstofflage die Superabsorber-Vliesstofflage. Damit wird die Superabsorber-Vliesstofflage nur dann aktiviert, wenn Flüssigkeit die äußere Mikrofaser-Vliesstofflage passiert.

Von außen anstehende Tropfen, zum Beispiel Kondensat oder Tau, führen noch nicht zur Aktivierung der Superabsorber-Vliesstofflage. Widersteht die Mikrofasern-Vliesstofflage beispielsweise Wasserdrücken von einigen Zentimetern, wird die Superabsorber-Vliesstofflage nur in den seltensten Fällen aktiviert.

Die Mikrofaser-Vliesstofflage bildet demnach eine Trägerlage für die Superabsorber-Vliesstofflage.

Die Superabsorber-Vliesstofflage ist bei Wasserkontakt selbstschließend ausgebildet und bevorzugt bis mindestens 1 Meter Wassersäule wasserdicht. Eine solche Wasserdichtigkeit ist in der Schutzklasse IP67 gefordert, um empfindliche Bauteile innerhalb eines Gehäuses vor einer Beaufschlagung mit Flüssigkeit zu schützen.

Die Membran kann mit dem Außenrand der Gasdurchtrittsöffnung stoffschlüssig verbunden sein. Bevorzugt ist die stoffschlüssige Verbindung durch eine Ultraschall-Schweißverbindung gebildet. Eine solche Verbindung ist einfach und prozesssicher herstellbar und während einer langen Gebrauchsdauer dicht.

Davon abweichend kann die stoffschlüssige Verbindung durch eine Klebeverbindung gebildet sein.

Die Innenseite der Druckausgleichsvorrichtung und damit das Innere eines Gehäuses, das eine solche Druckausgleichsvorrichtung umfasst, sind dadurch vor unerwünschten Umwelteinflüssen weiterhin geschützt.

Das Überdruckventil kann einen kreisringförmig ausgebildeten und in Richtung der Außenseite konvex vorgewölbten Schirm aus einem elastomeren Werkstoff umfassen, dessen Innenumfang dem Außenrand im Wesentlichen entspricht, wobei der Innenumfang die Membran in Richtung der Durchströmbarkeit auf der der Außenseite zugewandten Seite dichtend berührt. Der elastomere Werkstoff, aus dem der Schirm besteht, ist gas- und flüssigkeitsundurchlässig. Der Innenumfang stützt sich dicht auf dem Außenumfang der Membran ab, um einen Strömungskurzschluss während der bestimmungsgemäßen Verwendung der Druckausgleichsvorrichtung in dem Kontaktbereich zu verhindern.

Der Schirm weist einen als Dichtlippe ausgebildeten Außenumfang auf, wobei die Dichtlippe eine Dichtfläche des Käfigs unter elastischer Vorspannung dichtend berührt, wobei die Membran und der Schirm die Innen- und die Außenseite gemeinsam räumlich voneinander trennen und wobei die Dichtlippe für eine Notentgasung der Innenseite und zur Bereitstellung einer strömungsleitenden Verbindung zwischen Innen- und Außenseite von der Dichtfläche abhebbar und in Offenstellung bringbar ist.

Der gitterförmige Käfig kann zumindest zweiteilig ausgebildet sein, eine äußere Hälfte und eine innere Hälfte umfassen, wobei zwischen der äußeren und der inneren Hälfte die Membran und der Schirm angeordnet sind. Die der Innenseite zugewandte Unterseite des Schirms ist mit dem Druck von der Innenseite, die der Außenseite zugewandte Oberseite des Schirms mit dem Druck von der Außenseite, also dem Umgebungsdruck, beaufschlagt. Der gitterförmige Käfig weist gitterförmige Durchbrechungen auf, um die Membran Der Käfig besteht bevorzugt aus einem polymeren Werkstoff. Davon abweichend kann der Käfig aus einem metallischen Werkstoff bestehen.

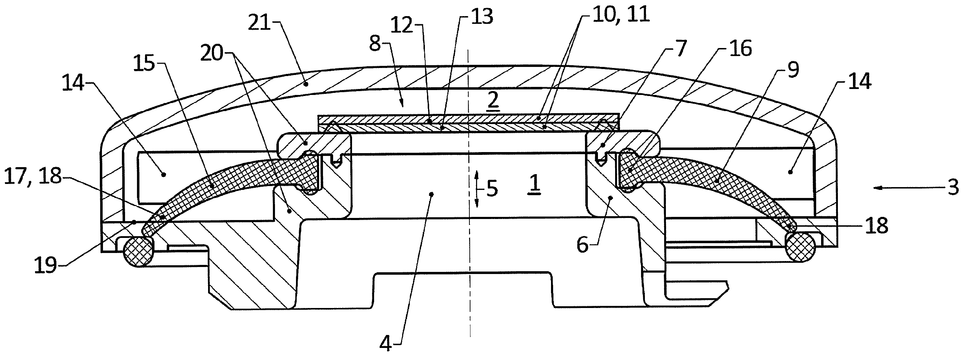

### Kurzbeschreibung der Zeichnung

Ein Ausführungsbeispiel einer erfindungsgemäßen Druckausgleichsvorrichtung wird nachfolgend anhand der Figur näher erläutert.

### Ausführung der Erfindung

In der Figur ist ein Ausführungsbeispiel einer Druckausgleichsvorrichtung in schematischer Darstellung gezeigt. Die Druckausgleichsvorrichtung kann für alle Arten von Gehäusen eingesetzt werden, bei denen unerwünschte Differenzdrücke zwischen Innen- 1 und Außenseite 2 vermieden werden sollen.

Die Druckausgleichsvorrichtung hat eine Innenseite 1 und eine Außenseite 2, wobei der Druck aus dem Inneren eines hier nicht dargestellten Gehäuses auf die Innenseite 1 und der Umgebungsdruck, zumeist Atmosphärendruck, auf die Außenseite 2 wirkt.

Die Druckausgleichsvorrichtung umfasst einen gitterförmigen Käfig 3, der im gezeigten Ausführungsbeispiel aus einer inneren Hälfte 20 und einer äußeren Hälfte 21 des Käfigs 3 besteht. Innerhalb des Käfigs 3, zwischen der inneren Hälfte 20 und der äußeren Hälfte 21, sind die gaspermeable Membran 8 und der als Überdruckventil 9 ausgebildete Schirm 15 angeordnet. Ein Bestandteil der inneren Hälfte 20 ist die Gasdurchtrittsöffnung 4, die die Innenseite 1 und die Außenseite 2 bedarfsweise strömungsleitend verbindet. Die Gasdurchtrittsöffnung 4 ist in Richtung 5 durchströmbar und ist durch den Innenrand 6 und den Außenrand 7 begrenzt.

Während der gesamten Gebrauchsdauer der Druckausgleichsvorrichtung ist die Gasdurchtrittsöffnung 4 von der Membran 8 stets überdeckt. Die Membran 8 trägt zum Berstschutz für das Gehäuse nichts bei.

Demgegenüber bildet das Überdruckventil 9 in Form des Schirms 15 den Berstschutz. Die Membran 8 und das Überdruckventil 9 sind in einer funktionstechnischen Parallelschaltung angeordnet, derart, dass die Druckdifferenz zwischen Innenseite 1 und Außenseite 2 sowohl auf die Membran 8 als auch auf das Überdruckventil 9 wirkt. Erst bei Überschreitung eines Differenzdruck-Schwellwertes, wobei der Druck auf der Innenseite 1 größer als der Druck auf der Außenseite 2 ist, gibt der Schirm 15 den direkten Weg zwischen Innen- 1 und Außenseite 2 für eine Notentgasung der Innenseite 1 frei.

Ein Berstschutz für ein Gehäuse, an dem die Druckausgleichsvorrichtung angeordnet ist, ist damit gegeben.

Im normalen Betrieb der Druckausgleichsvorrichtung liegt der Außenumfang 18, der als Dichtlippe 17 ausgebildet ist, auf der Dichtfläche 19 des Käfigs 3 unter elastischer Vorspannung dichtend an. Ein Druckausgleich erfolgt lediglich durch die gaspermeable Membran 8, die als Vliesstoff-Verbundteil 10 ausgebildet ist und aus der Mikrofaser-Vliesstofflag e 12 und der Superabsorber-Vliesstofflage 13 besteht. Nur für eine Notentgasung der Innenseite 1 und zur Bereitstellung einer strömungsleitenden Verbindung zwischen Innen- 1 und Außenseite 2 hebt die Dichtlippe 17 von der Dichtfläche 19 ab. Nach der Notentgasung legt sich die Dichtlippe 17 selbsttätig wieder dichtend an die Dichtfläche 19 an.

Zusätzlich zu der zuvor beschriebenen Druckausgleichsfunktion mit größtmöglicher Gasdurchlässigkeit durch die Membran 8 bewirken die gaspermeable Membran 8 und das Überdruckventil 9 eine Flüssigkeitsbarriere zwischen der Außenseite 2 und der Innenseite 1.

Dazu ist es erforderlich, dass die Membran 8 in bestimmter Art und Weise ausgestaltet ist, nämlich als Vliesstoff-Verbundteil 10.

Im hier gezeigten Ausführungsbeispiel umfasst die Membran 8, die als Vliesstoff-Verbundteil 10 und zweiteilig ausgebildet ist, eine Mikrofaser-Vliesstofflage 12 und eine Superabsorber-Vliesstofflage 13, wobei die Superabsorber-Vliesstofflage 13 in Richtung 5 der Durchströmbarkeit auf der der Innenseite 1 zugewandten Seite der Membran 8 angeordnet ist. Auf ihrer der Außenseite 2 zugewandten Seite ist die Superabsorber-Vliesstofflage 13 von der Mikrofaser-Vliesstofflage 12 überdeckt.

Wird die Superabsorber-Vliesstofflage 13 mit Flüssigkeit beaufschlagt, nimmt diese die Flüssigkeit in ihrer Struktur auf, was zu einer Quellung führt und zu einem hermetischen Verschluss der Gasdurchtrittsöffnung 4. Die Gasdurchtrittsöffnung 4 ist damit entsprechend wasserdicht.

Nachdem die Membran 8 nicht mehr mit Flüssigkeit beaufschlagt ist und nachdem die Membran 8 wieder getrocknet ist, wird die Membran 8 erneut gaspermeabel und gibt dadurch die Gasdurchtrittsöffnung 4 durch die Membran 8 hindurch wieder frei.

Es wird darauf hingewiesen, dass der zuvor beschriebene Fall, bei dem die Superabsorber-Vliesstofflage 13 die Gasdurchtrittsöffnung 4 hermetisch verschließt, im Normalfall nicht vorkommt. Die zur Außenseite 2 hin angeordnete Mikrofaser-Vliesstofflage 12 bildet für die Superabsorber-Vliesstofflage 13 eine Schutz-Lage und hält während des Normalfalls Flüssigkeit vollständig von der Superabsorber-Vliesstofflage 13 fern. So widersteht die Mikrofaser-Vliesstofflage 12 typischerweise Wassersäulen von einigen Zentimetern und insbesondere Spritz- oder Schlagwasser. Eine Beaufschlagung der Superabsorber-Vliesstofflage 13 mit Flüssigkeit tritt nur im Notfall ein, zum Beispiel dann, wenn das Gehäuse, das mit der Druckausgleichsvorrichtung versehen ist, längere Zeit komplett unter Wasser steht, wobei die anstehende Wassersäule so hoch ist, dass sie die Mikrofaser-Vliesstofflage durchdringen kann.

Die Durchbrechungen in der oberen Hälfte 21 des Käfigs 3 sind mit der Bezugsziffer 14 versehen.

Der Käfig 3 besteht im hier gezeigten Ausführungsbeispiel aus einem polymeren Werkstoff, wobei die Membran 8 mit dem Außenrand 7 der Gasdurchtrittsöffnung 4 mittels Ultraschall verschweißt ist. Die obere Hälfte 21 überdeckt die Membran 8 und schützt sie dadurch vor unerwünschten Umwelteinflüssen.

## Patentansprüche

1. Druckausgleichsvorrichtung für ein Gehäuse, wobei die Druckausgleichsvorrichtung eine Innenseite (1), eine Außenseite (2) und einen gitterförmigen Käfig (3) mit einer Gasdurchtrittsöffnung (4) umfasst, wobei die Gasdurchtrittsöffnung (4) die Innenseite (1) und die Außenseite (2) bedarfsweise strömungsleitend verbindet und in Richtung (5) ihrer Durchströmbarkeit von einem Innen- (6) und einem Außenrand (7) begrenzt ist, wobei die Gasdurchtrittsöffnung (4) von einer gaspermeablen Membran (8) überdeckt ist und wobei die Membran (8) als Vliesstoff-Verbundteil (10) ausgebildet ist und zumindest eine Vliesstofflage (11) umfasst, **dadurch gekennzeichnet, dass** der Membran (8) ein als Berstschutz ausgebildetes Überdruckventil (9) in einer funktionstechnischen Parallelschaltung zugeordnet ist.

2. Druckausgleichsvorrichtung nach Anspruch 1, **dadurch gekennzeichnet, dass** das Überdruckventil (9) einen kreisringförmig ausgebildeten und in Richtung (5) der Außenseite (2) konvex vorgewölbten Schirm (15) aus einem elastomeren Werkstoff umfasst, dessen Innenumfang (16) dem Außenrand (7) im Wesentlichen entspricht und dass der Innenumfang (16) den Außenrand (7) dichtend berührt.

3. Druckausgleichsvorrichtung nach einem der Ansprüche 1 oder 2,
**dadurch gekennzeichnet, dass** der Schirm (15) einen als Dichtlippe (17) ausgebildeten Außenumfang (18) aufweist, dass die Dichtlippe (17) eine Dichtfläche (19) des Käfigs (3) unter elastischer Vorspannung dichtend berührt, dass die Membran (8) und der Schirm (15) die Innen- (1) und die Außenseite (2) gemeinsam räumlich voneinander trennen und dass die Dichtlippe (17) für eine Notentgasung der Innenseite (1) und zur Bereitstellung einer strömungsleitenden Verbindung zwischen Innen- (1) und Außenseite (2) von der Dichtfläche (19) abhebbar und in Offenstellung bringbar ist.

4. Druckausgleichsvorrichtung nach einem der Ansprüche 1 bis 3, **dadurch gekennzeichnet, dass** zumindest eine Vliesstofflage (11) als Mikrofaser-Vliesstofflage (12) ausgebildet ist.

5. Druckausgleichsvorrichtung nach einem der Ansprüche 1 bis 4, **dadurch gekennzeichnet, dass** zumindest eine Vliesstofflage (11) als Superabsorber-Vliesstofflage (13) ausgebildet ist.

6. Druckausgleichsvorrichtung nach Anspruch 5, **dadurch gekennzeichnet, dass** die Superabsorber-Vliesstofflage (13) in Richtung (5) der Durchströmbarkeit auf der der Innenseite (1) zugewandten Seite der Membran (8) angeordnet ist und auf ihrer der Außenseite (2) zugewandten Seite von der Mikrofaser-Vliesstofflage (12) überdeckt ist.

7. Druckausgleichsvorrichtung nach einem der Ansprüche 5 oder 6,
**dadurch gekennzeichnet, dass** die Mikrofaser-Vliesstofflage (12) eine Trägerlage für die Superabsorber-Vliesstofflage (13) bildet.

8. Druckausgleichsvorrichtung nach einem der Ansprüche 5 bis 7, **dadurch gekennzeichnet, dass** die Superabsorber-Vliesstofflage (13) bei Wasserkontakt selbstschließend ausgebildet und bis mindestens 1 m Wassersäule wasserdicht ist.

9. Druckausgleichsvorrichtung nach einem der Ansprüche 1 bis 8, **dadurch gekennzeichnet, dass** die Membran (8) mit dem Außenrand (7) stoffschlüssig verbunden ist.

10. Gehäuse, umfassend eine Druckausgleichsvorrichtung nach einem der Ansprüche 1 bis 9.

11. Gehäuse nach Anspruch 10, **dadurch gekennzeichnet, dass** es elektronische Komponenten wie Elektromotoren oder Leistungselektronik umschließt.

12. Gehäuse nach einem der Ansprüche 10 oder 11, **dadurch gekennzeichnet, dass** es als Scheinwerfergehäuse ausgebildet ist.

13. Gehäuse nach Anspruch 10, **dadurch gekennzeichnet, dass** es einen chemischen Reaktor umschließt.

## Claims

1. Pressure-equalizing device for a housing, wherein the pressure-equalizing device comprises an inner side (1), an outer side (2) and a grid-like cage (3) with a gas passage opening (4), wherein the gas passage opening (4) connects the inner side (1) and the outer side (2) in flow-conducting fashion as required and is delimited in the direction (5) of its throughflow capability by an inner (6) and an outer edge (7), wherein the gas passage opening (4) is covered by a gas-permeable diaphragm (8), and wherein the diaphragm (8) is formed as a nonwoven composite part (10) and comprises at least one nonwoven layer (11), **characterized in that** the diaphragm (8) is assigned an overpressure valve (9), which is formed as a rupture protection means, in a functionally parallel configuration.

2. Pressure-equalizing device according to Claim 1, **characterized in that** the overpressure valve (9) comprises a circular-ring-shaped shield (15) which is convexly domed in the direction (5) of the outer side (2) and which is composed of an elastomer material, the inner circumference (16) of which shield substantially corresponds to the outer edge (7), and **in that** the inner circumference (16) makes sealing contact with the outer edge (7).

3. Pressure-equalizing device according to either of Claims 1 and 2, **characterized in that** the shield (15) has an outer circumference (18) formed as a sealing lip (17), **in that** the sealing lip (17) makes sealing contact with a sealing surface (19) of the cage (3) under elastic preload, **in that** the diaphragm (8) and the shield (15) together spatially separate the inner side (1) and the outer side (2) from one another, and **in that** the sealing lip (17) can be raised from the sealing surface (19) and moved into an open position for the purposes of emergency degassing of the inner side (1) and in order to provide a flow-conducting connection between inner side (1) and outer side (2).

4. Pressure-equalizing device according to one of Claims 1 to 3, **characterized in that** at least one nonwoven layer (11) is formed as a microfibre nonwoven layer (12).

5. Pressure-equalizing device according to one of Claims 1 to 4, **characterized in that** at least one nonwoven layer (11) is formed as a superabsorber nonwoven layer (13) .

6. Pressure-equalizing device according to Claim 5, **characterized in that** the superabsorber nonwoven layer (13) is, in the direction (5) of the throughflow capability, arranged on that side of the diaphragm (8) which faces toward the inner side (1), and said superabsorber nonwoven layer is, on its side facing toward the outer side (2), covered by the microfibre nonwoven layer (12).

7. Pressure-equalizing device according to either of Claims 5 and 6, **characterized in that** the microfibre nonwoven layer (12) forms a carrier layer for the superabsorber nonwoven layer (13).

8. Pressure-equalizing device according to one of Claims 5 to 7, **characterized in that** the superabsorber nonwoven layer (13) is designed to exhibit a self-closing action upon contact with water, and is water-impermeable to at least 1 m water column.

9. Pressure-equalizing device according to one of Claims 1 to 8, **characterized in that** the diaphragm (8) is cohesively connected to the outer edge (7).

10. Housing comprising a pressure-equalizing device according to one of Claims 1 to 9.

11. Housing according to Claim 10, **characterized in that** said housing encloses electronic components such as electric motors or power electronics.

12. Housing according to either of Claims 10 and 11, **characterized in that** said housing is formed as a headlamp housing.

13. Housing according to Claim 10, **characterized in that** said housing encloses a chemical reactor.

## Revendications

1. Dispositif de répartition de pression pour un boîtier, dans lequel le dispositif de répartition de pression comprend un côté intérieur (1), un côté extérieur (2) et une cage en forme de grille (3) avec une ouverture de passage de gaz (4), dans lequel l'ouverture de passage de gaz (4) relie le côté intérieur (1) et le côté extérieur (2) au besoin en guidant l'écoulement et est limitée dans la direction (5) de sa capacité de passage par un bord intérieur (6) et un bord extérieur (7), dans lequel l'ouverture de passage de gaz (4) est recouverte par une membrane (8) perméable au gaz et dans lequel la membrane (8) est formée par une pièce composite en non-tissé (10) et comprend au moins une couche de non-tissé (11), **caractérisé en ce qu'**une soupape de surpression (9) réalisée comme protection contre l'éclatement est associée à la membrane (8) en un montage parallèle au niveau fonctionnel.

2. Dispositif de répartition de pression selon la revendication 1, **caractérisé en ce que** la soupape de surpression (9) comprend un écran (15) en un matériau élastomère réalisé en forme d'anneau circulaire et pré-courbé sous forme convexe en direction (5) du côté extérieur (2), dont le contour intérieur (16) correspond essentiellement au bord extérieur (7) et **en ce que** le contour intérieur (16) touche hermétiquement le bord extérieur (7).

3. Dispositif de répartition de pression selon une des revendications 1 ou 2, **caractérisé en ce que** l'écran (15) présente un contour extérieur (18) réalisé en forme de lèvre d'étanchéité (17), **en ce que** la lèvre d'étanchéité (17) touche hermétiquement une face d'étanchéité (19) de la cage (3) avec une précontrainte élastique, **en ce que** la membrane (8) et l'écran (15) séparent ensemble spatialement l'un de l'autre le côté intérieur (1) et le côté extérieur (2) et **en ce que** la lèvre d'étanchéité (17) peut être soulevée de la face d'étanchéité (19) et amenée dans une position ouverte pour un dégazage d'urgence du côté intérieur (1) et pour la création d'une liaison de guidage d'écoulement entre le côté intérieur (1) et le côté extérieur (2).

4. Dispositif de répartition de pression selon l'une quelconque des revendications 1 à 3, **caractérisé en ce qu'**au moins une couche de non-tissé (11) est formée par une couche de non-tissé en microfibres (12).

5. Dispositif de répartition de pression selon l'une quelconque des revendications 1 à 4, **caractérisé en ce qu'**au moins une couche de non-tissé (11) est formée par une couche de non-tissé super-absorbant (13).

6. Dispositif de répartition de pression selon la revendication 5, **caractérisé en ce que** la couche de non-tissé super-absorbant (13) est disposée dans la direction (5) de la capacité de passage sur le côté de la membrane (8) tourné vers le côté intérieur (1) et est recouverte sur son côté tourné vers le côté extérieur (2) par la couche de non-tissé en microfibres (12).

7. Dispositif de répartition de pression selon une des revendications 5 ou 6, **caractérisé en ce que** la couche de non-tissé en microfibres (12) forme une couche de support pour la couche de non-tissé super-absorbant (13).

8. Dispositif de répartition de pression selon l'une quelconque des revendications 5 à 7, **caractérisé en ce que** la couche de non-tissé super-absorbant (13) se ferme automatiquement et est étanche à l'eau jusqu'à au moins 1 m de colonne d'eau.

9. Dispositif de répartition de pression selon l'une quelconque des revendications 1 à 8, **caractérisé en ce que** la membrane (8) est assemblée matériellement au bord extérieur (7).

10. Boîtier, comprenant un dispositif de répartition de pression selon l'une quelconque des revendications 1 à 9.

11. Boîtier selon la revendication 10, **caractérisé en ce qu'**il renferme des composants électroniques comme des moteurs électriques ou une électronique de puissance.

12. Boîtier selon une des revendications 10 ou 11, **caractérisé en ce qu'**il est formé par un boîtier de phare.

13. Boîtier selon la revendication 10, **caractérisé en ce qu'**il renferme un réacteur chimique.
